Europäisches Patentamt

European Patent Office

Office européen des brevets

(11) Numéro de publication: **0 126 658**

**B1**

(12) # FASCICULE DE BREVET EUROPÉEN

(45) Date de publication du fascicule du brevet:
04.11.87

(51) Int. Cl.⁴: **G 01 K 17/00,** G 21 F 5/00

(21) Numéro de dépôt: **84400729.4**

(22) Date de dépôt: **11.04.84**

(54) Dispositif thermoflux-métrique pour le contrôle de matières calogènes à l'intérieur d'un conteneur.

(30) Priorité: **19.04.83 FR 8306366**

(43) Date de publication de la demande:
**28.11.84 Bulletin 84/48**

(45) Mention de la délivrance du brevet:
**04.11.87 Bulletin 87/45**

(84) Etats contractants désignés:
**BE CH DE GB IT LI NL SE**

(56) Documents cité:
**FR-A-2 140 528**
**FR-A-2 170 795**
**FR-A-2 243 427**
**US-A-3 022 478**
**US-A-4 346 864**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Bourrelly, Paul, 27, Boulevard Haguenau, F-13012 Marseille (FR)**
Inventeur: **Patin, Henri, 122 A., rue Ferrari, F-13005 Marseille (FR)**
Inventeur: **Schoepp, Robert, 11, rue Jean, F-13004 Marseille (FR)**
Inventeur: **Sanson, Charles, 2, rue du Poisson Bleu, F-92290 Chatenay Malabry (FR)**

(74) Mandataire: **Mongrédien, André, c/o BREVATOME 25, rue de Ponthieu, F-75008 Paris (FR)**

LIBER, STOCKHOLM 1987

## Description

La présente invention a pour objet un dispositif thermoflux-métrique pour le contrôle de matières calogènes à l'intérieur d'un conteneur.

Elle trouve de nombreuses applications dans les domaines très divers nucléaires ou non et particulièrement dans la gestion de magasins de stockage des matières nucléaires calogènes où elle permet de mesurer les quantités de ces matières en un temps très bref.

On sait que tout corps radioactif émet un rayonnement qui, s'il est absorbé par l'air ou la matière qui se trouve placée à l'intérieur du volume déterminé par le capteur c'est-à-dire à la cellule du calorimètre, se transforme en chaleur. En mesurant cette quantité de chaleur, on peut (pour un corps radioactif déterminé) connaître la quantité du produit radioactif qui se trouve dans la cellule de mesure. Par exemple, on peut connaître la quantité de tritium existant dans un composé tritié grâce à l'émission du rayonnement $\beta$ du tritium. De même, les radionucléides présents dans le plutonium, l'américium, le neptunium, etc. émettent un rayonnement $\alpha$ dont l'énergie est convertie en chaleur dans la masse même de l'échantillon. Cette quantité de chaleur est mesurée dans un calorimètre préalablement étalonné. Elle est reliée à la masse de plutonium, américium, neptunium, ... contenue dans l'échantillon.

Un tel calorimètre est décrit dans le brevet français FR-A-2 170 795. Cet appareil utilise, comme détecteur, une double résistance électrique dont la sensibilité n'est pas très grande. Par conséquent, la précision des mesures n'est acceptable que lorsque le gradient de température entre les deux résistances de mesure est suffisant, ce qu'on obtient en séparant lesdites résistances par un matériau thermiquement isolant.

Dans ces conditions, l'équilibre thermique n'est atteint qu'au bout d'une ou deux dizaines d'heures. Pendant tout ce temps, il est nécessaire de maintenir la température de référence aussi constante que possible, et des contrôles doivent être faits à intervalles réguliers.

En conclusion, ce fluxmètre connu est un appareil coûteux, peu commode d'emploi, pratiquement intransportable, et qui, de plus, ne s'adapte pas à tous les types de conteneurs.

L'utilisation de résistances électriques dont la résistance varie avec la température comme celles utilisées dans le brevet cité pour la mesure d'une température est connue notamment par le brevet US-A-3 022 478.

On connaît également par le brevet FR-A-2 243 427 des détecteurs de flux thermiques composés d'une multitude de thermocouples en série.

La presente invention a justement pour but de remédier aux inconvénients des dispositifs connus.

Pour cela, on cherche contrairement au fluxmètre de l'art antérieur, à perturber le moins possible, l'equilibre thermique de l'échantillon dans son conteneur et du milieu ambiant.

L'invention a pour objet un dispositif thermoflux-métrique pour le contrôle de matières calogènes à l'intérieur d'un conteneur comportant des sondes de température, caractérisé en ce que lesdites sondes sont des thermistances réparties selon une première série disposée à la surface extérieure du conteneur, lesdites thermistances étant en contact thermique avec le conteneur et isolées thermiquement de l'air ambiant, et une seconde série disposée à la surface d'une pièce d'un matériau de bonne conduction thermique baignant dans le milieu ambiant de conteneur, la différence de température entre les températures mesurées par lesdites séries de thermistances permettant de connaître le flux thermique émis par les matières calogènes contenues dans le conteneur.

Selon une première variante du dispositif conforme à l'invention, chaque thermistance de ladite première séri est placée dans un support composé d'une partie rigide et d'une matière souple et thermo-isolante, celle-ci contenant la thermistance et l'isolant thermiquement de l'influence de l'air ambiant.

Selon une deuxième variante, le conteneur assure le confinement de matières radio-actives calogènes et est situé dans une cage centrée de transport, en ce que première série de thermistances est disposée sur la surface dudit conteneur au moyen de ceintures et la deuxième série est placée sur des réglettes fixées sur des montants tubulaires constituant ladite cage.

Selon une troisième variante, le nombre et le placement des ceintures portant la première série de thermistances-correspondent au nombre et à l'emplacement des échantillons calogènes à l'intérieur de conteneur.

Les caractéristiques de l'invention ressortiront mieux de la description qui va suivre, donnée à titre explicatif et non limitatif, en référence aux dessins annexés sur lesquels:

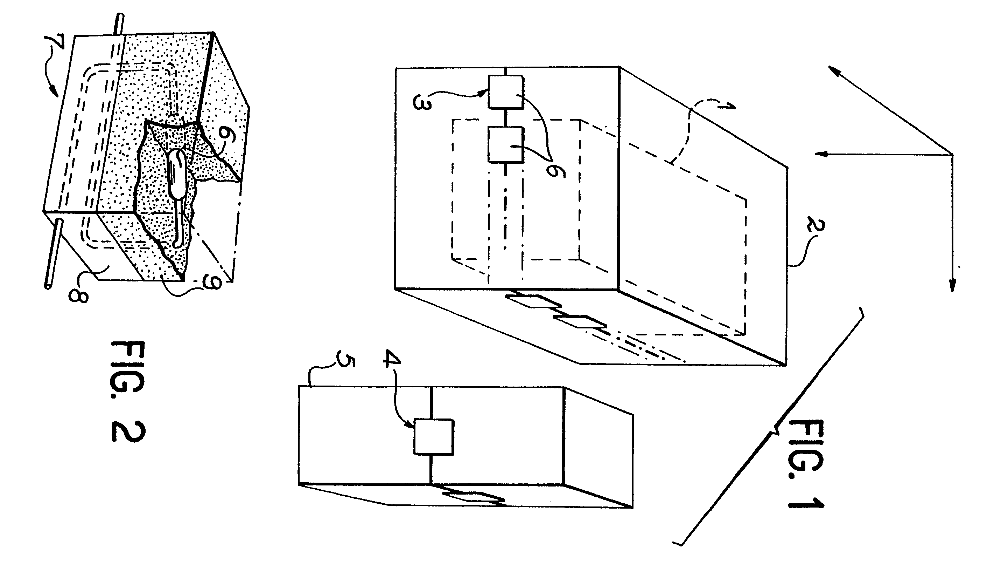

- la figure 1 représente schématiquement en perspective, le dispositif thermoflux-métrique selon l'invention,

- la figure 2 représente schématiquement un support de thermistance,

- la figure 3 représente schématiquement un mode de réalisation d'un confinement de matière radioactive calogène et de sa cage de transport ainsi que l'implantation de thermistances au moyen de ceintures et de réglettes,

- la figure 4a représente schématiquement un mode de réalisation d'une ceinture souple, comportant des thermistances,

- la figure 4b représente une réglette cage comportant aussi des thermistances,

- la figure 5 est un diagramme qui montre la courbe des températures mesurées sur la paroi d'un confinement en fonction du temps après introduction des échantillons radioactifs,

- la figure 6 est un diagramme qui montre la courbe des températures après la mise en place des sondes thermiques.

Sur la figure 7, on voit un échantillon de matière calogène 1 se trouvant dans un conteneur 2.

Sur la paroi de celui-ci est représentée une première série 3 de thermistances 6, dont la géométrie de la distribution a été choisie afin d'obtenir une valeur significative à la fois de la température de cette surface et de l'échantillon dans le conteneur.

Dans le milieu ambiant entourant ce conteneur, est représentée une deuxième série 4 de thermistances. Elles sont fixées sur la surface d'une pièce 5 d'une matière de bonne conduction thermique. Le flux thermique qui sort du conteneur entraîne un gradient de température entre les deux séries de thermistances. A partir de celui-ci et moyennant un étalonnage préalable, on peut déduire, de manière connue, les quantités de matières calogènes se trouvant à l'intérieur d'un conteneur.

Comme le montre la figure 2, chaque thermistance 6 de la première serie 3 est placée dans un support 7 composé d'une partie rigide 8 et d'une partie souple 9 thermo-isolante. La thermistance est noyée dans cette partie souple et est ainsi isolée thermiquement de l'influence de l'air ambiant. A titre d'exemple, la partie rigide peut être réalisée en téflon, la partie souple en mousse de polyéther.

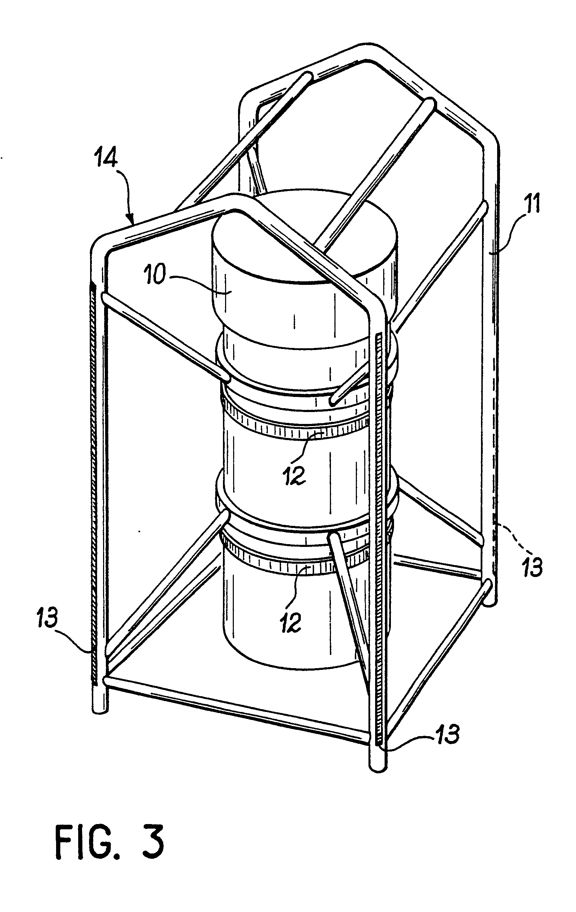

La figure 3 représente un mode d'application du thermoflux-mètre selon l'invention avec un confinement 10 de matières radioactives calogènes situées dans une cage centrée de transport 14.

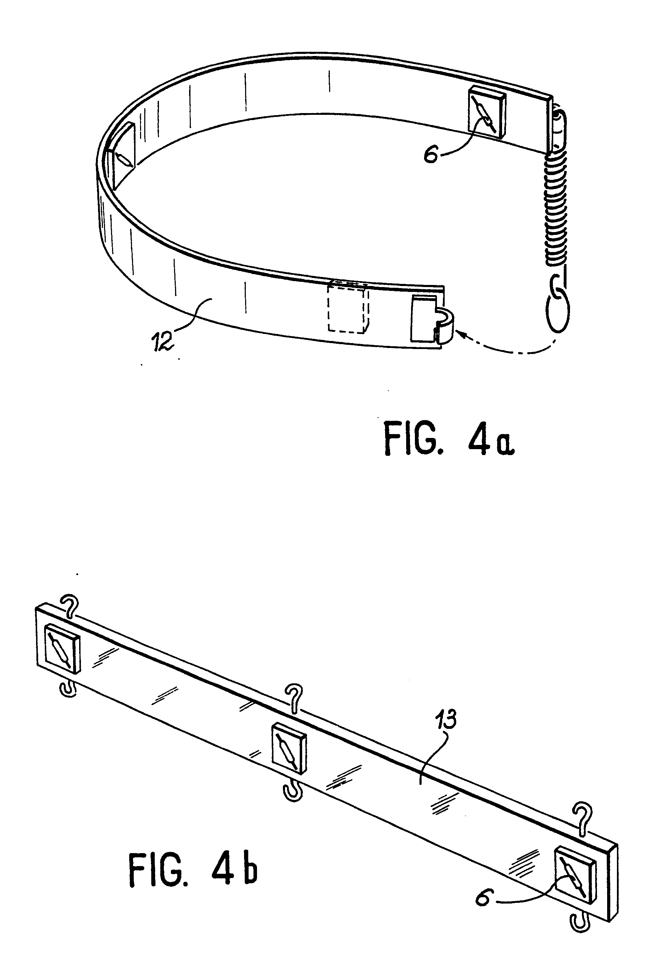

Le confinement est de forme cylindrique c'est la raison pour laquelle dans un mode de réalisation préféré, la première série de thermistances est fixée sur des ceintures 12 faciles à poser rapidement sur la paroi du cylindre, comme le montre la figure 4a.

Le confinement 10 renferme de 1 à 4 échantillons superposés et la puissance émise de chaque échantillon est comprise entre 0 et 12 Watts. Comme les répartitions des sources de puissance sont donc nombreuses, il est indispensable que la mesure du flux thermique puisse permettre de repérer simultanément la position géométrique de chaque échantillon. C'est la raison pour laquelle la disposition de chaque ceinture portant un groupement de thermistances, est telle qu'elle fournit une valeur significative à la fois de la température et du positionnement de l'échantillon calogène à l'intérieur du confinement 10.

Des thermistances formant la deuxième série sont groupées sur des réglettes 13 (figure 4b) qui sont faciles à fixer sur les montants tubulaires, l'ensemble formant la cage de transport 14. Ces montants ont une bonne conduction thermique et baignent dans l'air ambiant. Le contact thermique des thermistances de la deuxième série avec des pièces d'un matériau de bonne conduction thermique comme des tubes métalliques 11 constituant la cage, permet de mesurer une valeur de la température ambiante moyenne qui ne suit pas des changements de température abruptes provoqués par des perturbations momentanées.

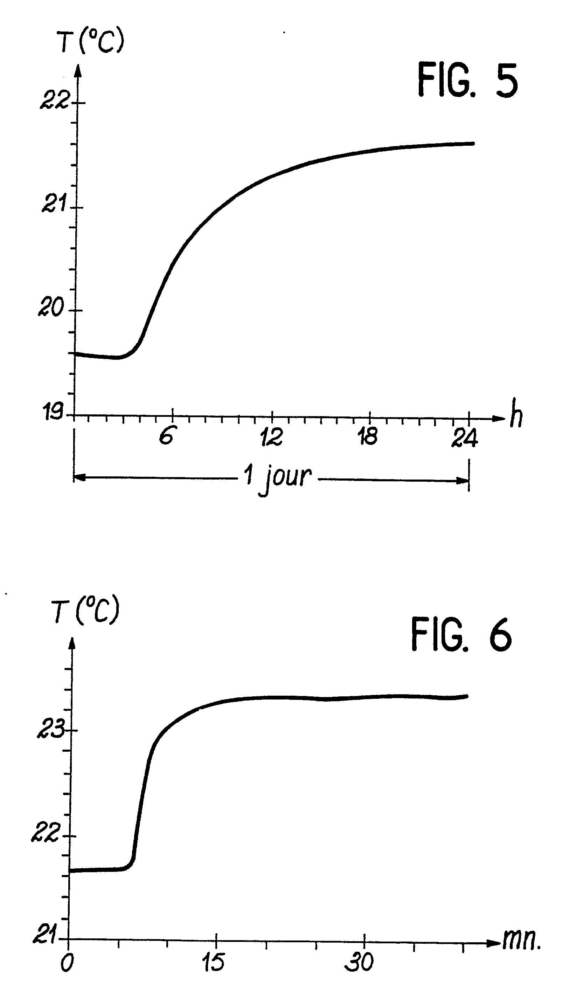

Les échantillons calogènes ont été introduits dans la cage bien avant que la mesure ne soit effectuée, car l'équilibre thermique est long à atteindre (de l'ordre de 24 heures comme le montre la figure 5) à cause de la grande masse du système et de sa grande inertie thermique.

Lors de la mise en place des ceintures et réglettes, il s'écoule environ 20 minutes avant que le régime d'équilibre soit atteint comme le montre la figure 6.

La méthode calorimétrique permet donc d'effectuer des mesures en environ 20 minutes après la mise en place dessondes thermiques.

On obtient une précision de mesure de 1 à 6 % suivant que l'on opère dans un local plus ou moins bien régulé en température.

L'exemple d'une application du thermoflux-mètre selon l'invention avec un confinement pour des matières radioactives calogènes qui vient d'être décrite montre sa haute performance en local industriel, qui permet de mettre au point un système de mesure répondant bien aux contraintes d'utilisation:

- le temps de mesure ne dépasse pas quelques dizaines de minutes;
- la précision obtenue est de 1 à 6 % suivant en particulier les variations des conditions ambiantes;
- le thermoflux-mètre est facile à monter et à transporter.

Enfin, la simplicité du thermoflux-mètre rend son coût très faible.

On peut aussi envisager d'utiliser ce dispositif pour contrôler les assemblages des réacteurs nucléaires à condition que la puissance dégagée soit ssuffisante, pour évaluer le degré d'encrassement en matières calogènes des filtres à la sortie des boîtes à gants et pour contrôler des casiers de stockage muraux de produits radioactifs, etc.

**Revendications**

1. Dispositif thermoflux-métrique pour le contrôle de matières calogènes (1) à l'intérieur d'un conteneur (2) comportant des sondes de température, caractérisé en ce que lesdites sondes sont des thermistances réparties selon une première série (3) disposée en contact thermique à la surface extérieure du conteneur (2) et isolées thermiquement de l'air ambiant, et une seconde série (4) disposée en contact thermique à la surface d'une pièce (5) d'un matériau de bonne conduction thermique baignant dans le milieu ambiant du conteneur (2), la différence de température entre les températures mesurées par lesdites séries (3, 4) de thermistances permettant de connaître le flux thermique émis par les matières calogènes contenues dans le conteneur (2).

2. Dispositif selon la revendication 1, caractérisé en ce que chaque thermistance de ladite première serie (3) est placée dans un support (7) composé d'une partie rigide (8) et d'une matière souple et thermo-isolante (9), celle-ci contenant la thermistance et l'isolant thermiquement de l'influence de l'air ambiant.

3. Dispositif selon la revendication 1, caractérisé en ce que le conteneur (2) assure le confinement (10) de matières radioactives calogèns et est situé dans une cage (14) centrée de transport, en ce que la première série de thermistances (3) est disposée sur la surface dudit conteneur (2) au moyen de ceintures (12) et la deuxième série (4) est placée sur des réglettes (13) fixées sur des montants tubulaires (11) constituant ladite cage.

4. Dispositif selon la revendication 3, caractérisé en ce que le nombre et le placement des ceintures (12) portant la première série (3) de thermistances correspondent au nombre et à l'emplacement des échantillons (1) calogènes à l'intérieur du conteneur (2).

**Patentansprüche**

1. Wärneflußmeßgerät zur Überwachung von wärmeerzeugenden, in einen Behälter aufgenommenen Stoffen (1) mit Temperaturfühlern, dadurch gekennzeichnet, daß die Fühler Thermistoren sind, die längs einer ersten Reihe (3) in Wärmekontakt mit der Außenoberfläche des Behälters (2) und gegenüber der Ungebungsluft wärmeisoliert angeordnet sind, und daß eine zweite Reihe (4) in Wärmekontakt mit der Oberfläche eines Teils (5) aus einem Material mit guter Wärmeleitfähigkeit angeordnet ist, welches von den Ungebungsmilieu des Behälters (2) umspült wird, wobei der Temperaturunterschied zwischen den durch die Reihen (3, 4) von Thermistoren gemessenen Temperaturen ermöglicht, den von den in dem Behälter (2) aufgenommenen, wärmeerzeugenden Stoffen ausgesandten Wärmefluß zu kennen.

2. Gerät nach Anspruch 1, dadurch gekennzeichnet, daß jeder Thermistor der ersten Reihe (3) in einer Halterung (7) angeordnet ist, die von einen steifen Teil (8) und einem flexiblen und wärmeisolierenden Material (9) gebildet ist, welches den Thernistor enthält und diesen wärmemäßig gegen den Einfluß der Umgebungsluft isoliert.

3. Gerät nach Anspruch 1, dadurch gekennzeichnet, daß der Behälter (2) die Einschließung (10) von wärmeerzeugenden, radioaktiven Stoffen sicherstellt und sich in einem zentrierten Transportgestell (14) befindet, daß die erste Reihe von Thermistoren (3) auf der Oberfläche des Behälters (2) mittels Gürteln (12) angeordnet ist und die zweite Reihe (4) auf Stäben (13) angeordnet ist, die an rohrförmigen Stützen (11) befestigt sind, die das Gestell bilden.

4. Gerät nach Anspruch 3, dadurch gekennzeichnet, daß die Anzahl und die Lageanordnung der die erste Reihe (3) von Thermistoren tragenden Gürtel (12) der Anzahl und der Lage der wärneerzeugenden Proben (1) in Inneren des Behälters (2) entsprechen.

**Claims**

1. Heat flow measurement device for monitoring heatproducing materials (1) inside a container (2) comprising temperature probes, characterized in that the said probes are thermistors distributed as a first series (3) arranged in thermal contact with the outer surface of the container (2) and thermally insulated from the surrounding air, and a second series (4) arranged in thermal contact with the surface of a component (5) of a material with good thermal conduction immersed in the surrounding medium of the container (2), the temperature difference between the temperatures measured by the said series (3, 4) of thermistors making it possible to know the heat flow emitted by the heat-producing materials held in the container (2).

2. Device according to Claim 1, characterized in that each thermistor of the said first series (3) is placed in a support (7) consisting of a rigid part (8) and of a flexible and thermally insulating material (9), the latter containing the thermistor and insulating it thermally from the influence of the surrounding air.

3. Device according to Claim 1, characterized in that the container (2) ensures the confinement (10) of heat-producing radioactive materials and is situated in a centered transport cage (14), in that the first series of thermistors (3) is arranged of the surface of the said container (2) by means of belts (12) and the second series (4) is placed on small rules (13) fastened on tubular uprights (11) forming the said cage.

4. Device according to Claim 3, characterized in that the number and the placing of the belts (12) carrying the firstseries (3) of thermistors correspond to the number and the lacation of the heat-producing samples (1) inside the container (2).

FIG. 1

FIG. 2

FIG. 3

FIG. 4a

FIG. 4b

FIG. 5

FIG. 6